# EUROPEAN PATENT SPECIFICATION

(11) **EP 1 926 326 B1**
(45) Date of publication and mention of the grant of the patent: **08.10.2014**
(21) Application number: 07015694.8
(22) Date of filing: 09.08.2007
(51) Int. Cl.: H04W 76/02

(54) **Data call control method and apparatus for mobile station**
Datenanruf-Steuerungsverfahren und Vorrichtung für mobile Stationen
Procédé de contrôle d'appels de données et appareil pour station mobile

(30) Priority: 23.11.2006 KR 20060116331
(43) Date of publication of application: 28.05.2008
(73) Proprietor: Samsung Electronics Co., Ltd., Suwon-si, Gyeonggi-do, 443-742 (KR)
(72) Inventor: Kwak, Yo Seob, Gyeonggi-do (KR); Jeong, Hyo Yi, Gyeonggi-do (KR)
(74) Representative: Nederlandsch Octrooibureau

(56) References cited:
- WO-A1-03/075597
- WO-A1-2005/101765
- US-A- 5 765 108
- US-A1- 2005 041 597
- "Data Service Options for Spread Spectrum Systems, 3GPP2 C.S0017-0 Version 5.0" In: "3GPP2 C.S0017-0 Version 5.0", 17 February 2003 (2003-02-17), XP55037937, pages 1-70, * page 1.7, paragraph 1.4.2.2 * * pages 1.8-1.9, paragraph 1.4.2.3 * * figures 3-4 *
- "Upper Layer (Layer 3) Signaling Standard for cdma2000 Spread Spectrum Systems, Release D", 3GPP2 C.S0005-D, VERSION 1.0,, vol. C.S0005-D, no. 1.0, 1 February 2004 (2004-02-01), pages I-XLIX,1,1, XP008121523,

## Description

### BACKGROUND OF THE INVENTION

### FIELD OF THE INVENTION

The present invention relates to a mobile station supporting packet data services and, more particularly, to a data call control method and apparatus for a mobile station, wherein when the mobile station receives a Release order message during a data call for a particular data service, retrying the data call for the same data service is restricted, which may maintain network efficiency.

### DISCUSSION OF THE BACKGROUND

Advanced mobile communication systems provide both voice services and highspeed data services to users through wireless channels. Efficient management of wireless channel resources is necessary for a mobile communication system to provide data services such as packet data services. For example, static allocation of a traffic channel to a data service results in the waste of wireless channel resources.

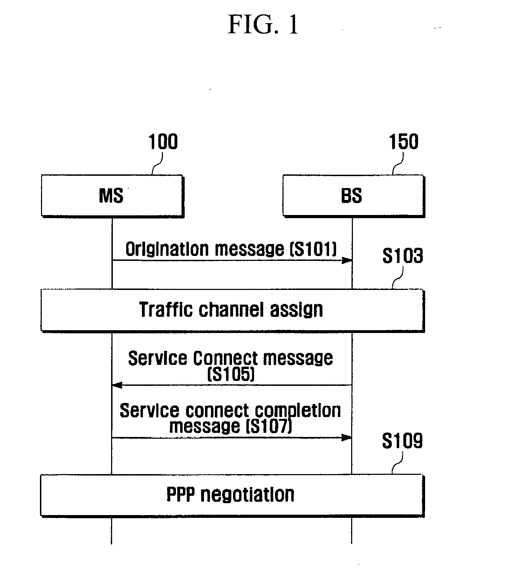

FIG. 1 is a sequence diagram showing interactions between a mobile station and a base station to establish a data service connection.

Referring to FIG. 1, the mobile station 100 transmits an Origination message requesting a particular service option to the base station 150 (S101). In response to the Origination message, the base station 150 allocates a traffic channel and transmits a Channel assignment message indicating the allocated traffic channel to the mobile station 100. When the mobile station 100 receives the Channel assignment message, the traffic channel is established (S103).

Thereafter, the mobile station 100 and the base station 150 perform service negotiation with each other. The base station 150 transmits a Service connect message to the mobile station 100 (S105). In return, the mobile station 100 transmits a Service connect completion message to the base station 150 (S 107).

After service negotiation, the mobile station 100 and base station 150 negotiate with each other to establish a Point-to-Point protocol (PPP) session (S109). Thereby, a data call is established between the mobile station 100 and base station 150, and packet data may be exchanged through the data call.

When the mobile station 100 in a data service receives a Release order message from the base station 150, it releases the allocated traffic channel. In particular, when the mobile station 100 receives a Release order message before a data call is established, the mobile station 100 releases the traffic channel. In addition, it should not retry to place a data call for the same data service. However, conventional mobile stations may not be able to restrict a data call retrial, resulting in wasted wireless resources and reduced network efficiency.

Document WO 03/075597 discloses a method for admitting a voice call while a mobile station (MS) is engaging in a data call in a telecommunication network. First, a predetermined message is sent from a base station (BS) to the MS prohibiting the MS from initiating a data call for a predetermined period of time after receiving the predetermined message. The BS then releases a communication channel to be used for the voice call, and initiates the voice call, and the data call is reconnected after either voice call is completed. Document WO 03/075597 does not disclose that the call retry restriction is necessary when receiving a Release order message within a time period from traffic channel allocation to point-to-point protocol (PPP) session negotiation.

Document "Upper Layer (Layer 3) Signaling Standard for cdma2000 Spread Spectrum Systems, Release D", 3GPP2 C.S0005-D, Version 1.0 vol C.S0005-D, version 1.0, 1 February 2004 (2004-02-01) discloses a method for controlling a data call at a mobile station wherein the mobile station communicates with a base station using forward and reverse Traffic Channels. And the mobile station is going into a Release Substate upon receiving a Release Order message. That document does not disclose that the call retry restriction is necessary when receiving a Release order message within a time period from traffic channel allocation to point-to-point protocol (PPP) session negotiation.

### SUMMARY OF THE INVENTION

The present invention provides a method and apparatus for a mobile station that may restrict retrial of a data call. The invention is defined by the appended independent claims 1 (method) and 4 (apparatus).

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a sequence diagram showing interactions between a mobile station and a base station to establish a data service connection.
FIG. 2 shows a configuration of a mobile station according to an exemplary embodiment of the present invention.
FIG. 3 is a flow chart showing a data call control method according to another exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The present invention relates to data call retry restriction in a mobile station supporting data services. When the mobile station receives a Release order message from a serving base station during a data call for a particular data service, retrying the data call for the data service is restricted.

In particular, when the mobile station receives a Release order message from the base station within a specified time from traffic channel allocation to PPP negotiation (before allocation of Internet Protocol (IP)-related resources), it terminates the current data call and restricts a data call retry restriction is enforced. Consequently, the mobile station no longer transmits an Origination message requesting the same data service on an access channel during a retry delay period. This may prevent degradation of mobile network efficiency.

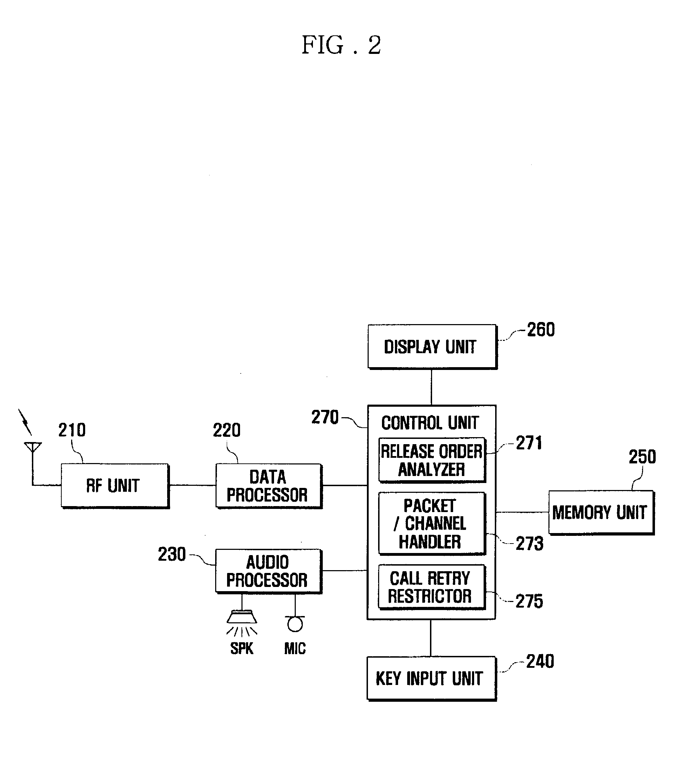

FIG. 2 shows a configuration of a mobile station according to an exemplary embodiment of the present invention.

Referring to FIG. 2, a mobile station supports voice and data communication through a wireless network and includes a radio frequency (RF) unit 210, a data processor 220, an audio processor 230, a key input unit 240, a memory unit 250, a display unit 260, and a control unit 270. The control unit 270 includes a release order analyzer 271, a packet/channel handler 273, and a call retry restrictor 275.

The RF unit 210 performs voice and data communications for the mobile station through a wireless channel to a mobile communication system. The RF unit 210 may include an RF transmitter for up-converting the frequency of a signal to be transmitted and amplifying the signal, and an RF receiver for low-noise amplifying a received signal and down-converting the frequency of the received signal.

The data processor 220 processes audio data that is transmitted to and from the audio processor 230, alphanumeric data from the key input unit 240, and voice data and other user data (for example, a Release order message and packet data related to a data service) that is transmitted to and from the RF unit 210. The data processor 220 may include an encoder/decoder (codec) and a modem to process signals transmitted through the RF unit 210. The codec includes a data codec to process packet data, and an audio codec to process audio data such as a voice signal.

The audio processor 230 reproduces an audio signal from the data processor 220 through a speaker SPK, and transmits an audio signal, such as a voice signal from a microphone MIC, to the data processor 220.

The key input unit 240 includes numeric, character, and function keys to input alphanumeric information and for setting various functions. The key input unit 240 transmits key signals for user settings and control of the mobile station to the control unit 270.

The memory unit 250 stores control and application programs related to the operation of the mobile station, as well as data resulting from execution of the application programs or data received from an external source (for example, a Release order message and packet data for a data service). The memory unit 250 may provide a plurality of buffers for storing temporary data resulting from execution of an application program.

The display unit 260 displays, under the control of the control unit 270, messages and status data related to operation of the mobile station. The display unit 260 may include a liquid crystal display (LCD) device. If the panel has touch screen capability, the display unit 260 may also act as an input device.

The control unit 270 controls the overall operation and signal exchange between internal elements of the mobile station, and may include the data processor 220. In particular, the control unit 270 restricts data call retrial when the mobile station receives a Release order message from a base station during a data call for a particular data service. For that purpose, the control unit 270 includes the release order analyzer 271, packet/channel handler 273, and call retry restrictor 275.

The release order analyzer 271 analyzes a Release order message received from a corresponding base station to determine the necessity of restrictions on data call retrial. For example, if a Release order message is received within a period of time from traffic channel allocation to PPP negotiation, the release order analyzer 271 determines that data call retry restriction is necessary.

If data call retry restriction is determined to be necessary, the packet/channel handler 273 terminates the current data call and releases the traffic channel allocated to the mobile station.

Also, the call retry restrictor 275 restricts retrying of the data call so as to prevent the transmission of an Origination message requesting the same data service on an access channel during a retry delay period.

Referring to FIG. 2, the operation of the mobile station for data call retry restriction is described. When a Release order message is received from a corresponding base station, the release order analyzer 271 determines the necessity of data call retry restriction.

For example, if a Release order message is received within a time duration from traffic channel allocation to PPP negotiation, the release order analyzer 271 determines that data call retry restriction is necessary.

If data call retry restriction is necessary, the packet/channel handler 273 terminates the current data call and releases the traffic channel allocated to the mobile station. In addition, the call retry restrictor 275 restricts retries of a data call so as to prevent transmission of an Origination message requesting the same data service on an access channel for a retry delay duration.

The configuration in FIG. 2 is illustrated for the purpose of description. The present invention is not limited to the illustrated configuration. Therefore, the mobile station may further include modules such as a Bluetooth module, camera module, and digital broadcast receiving module.

Hereinabove, the configuration and operation of the mobile station are described. Next, a method of data call retry restriction is described. That is, if a Release order message is received while connecting a data call, retries of the data call is restricted for a preset time duration. The present invention is not limited to the following description, and many modifications may be made to the method.

The mobile station of the present invention may further include, among others, a Bluetooth module, camera module, or digital broadcast receiving module.

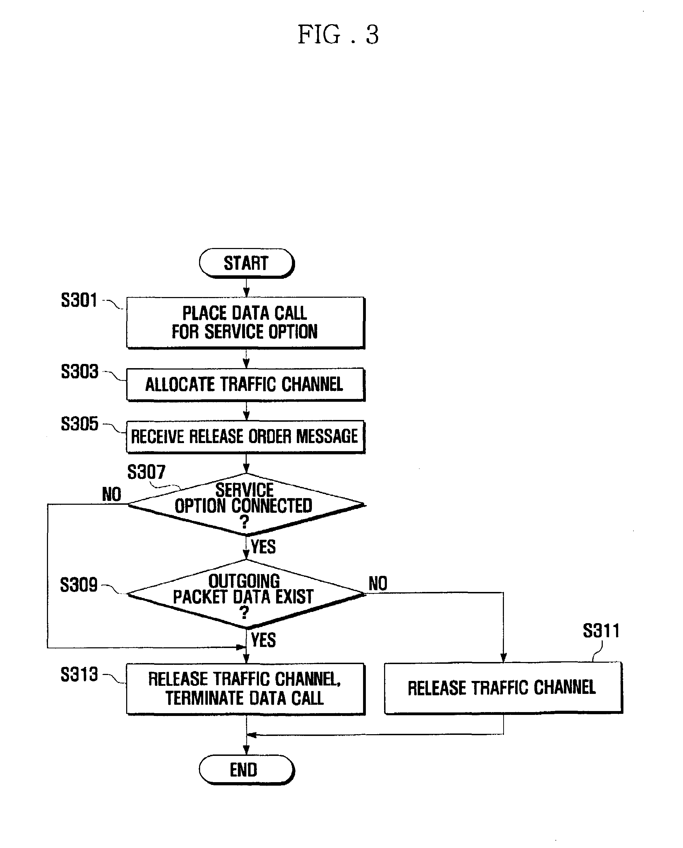

FIG. 3 is a flow chart showing a data call control method for a mobile station according to another exemplary embodiment of the present invention.

Referring to FIG. 3, the mobile station places a data call by sending an Origination message requesting a data service option to a corresponding base station (S301). In reply to the Origination message, the base station allocates a traffic channel to the mobile station (S303), as described in connection with FIG. 1.

When the mobile station receives a Release order message from the base station (S305), the mobile station determines whether the data service option is already connected (S307). If the data service option is not yet connected, the mobile station releases the traffic channel and terminates the current data call (S313).

If the data service option is already connected, the mobile station checks whether packets to be transmitted are present (S309). The packets may contain photographs or moving images.

If there are no packets to be transmitted, the mobile station releases the traffic channel and terminates the data call (S313). If packets to be transmitted are not present, the mobile station releases the traffic channel (S311).

As apparent from the above description, the present invention provides a data call control method and apparatus for a mobile station that restricts retrying the data call for the same data service when the mobile station receives a Release order message from a serving base station during a data call for a particular data service, so as not to transmit an Origination message. This may prevent degradation of mobile network efficiency.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A method for controlling a data call at a mobile station, comprising:
detecting reception of a Release order message from a base station during a data call (S305);
determining whether call retry restriction is necessary based on the Release order message; and
restricting retrying of the data call during a retry delay period, when call retry restriction is necessary, **characterised in that** the call retry restriction is necessary when receiving the Release order message within a time period from traffic channel allocation to point-to-point protocol (PPP) session negotiation.

2. The method of claim 1, wherein determining whether call retry restriction is necessary further comprises:
determining whether a traffic channel is allocated at the time of reception of the Release order message;
releasing, if a traffic channel is allocated, the allocated traffic channel;
determining, if a traffic channel is not allocated, whether the service option is connected (S307);
performing, if the service option is not connected, traffic channel release and terminating the data call (S3130;
determining, if the service option is connected, whether packets to be transmitted are present (s309);
performing, if packets to be transmitted are not present, traffic channel release (S311); and
performing, if packets to be transmitted are present, traffic channel release and terminating the data call (S313).

3. The method of claim 1, wherein restricting retrying of the data call comprises prohibiting the mobile station from transmitting an Origination message on an access channel to the base station during the retry delay period.

4. A data call control apparatus for a mobile station, comprising:
a radio frequency unit (210) adapted to perform voice and data communication with a base station; and
a control unit (270) adapted to restrict retrying of a data call for the service option during a retry delay period upon reception of a Release order message from the base station during the data call, the control unit further comprises:
a release order analyzer (271) adapted to analyze a received Release order message to determines if call retry restriction is necessary; and
a call retry restrictor (275) to restrict, if call retry restriction is necessary, retrying of the data call for the service option **characterised in that** the control unit is adapted to determine that call retry restriction is necessary when the Release order message is received within a time period from traffic channel allocation to point-to-point protocol (PPP) session negotiation.

5. The data call control apparatus of claim 4, wherein the control unit further comprises a packet/channel handler (273) adapted to release an allocated traffic channel and terminate the current data call.

6. The data call control apparatus of claim 4, wherein the call retry restrictor (275) is adapted to prohibit transmission of an Origination message on an access channel to the base station during the retry delay period after traffic channel release or data call termination if call retry restriction is determined to be necessary.

7. The data call control apparatus of claim 4, further comprising a data processor (220) adapted to process data associated with a received Release order message and packet data associated with a connected service option.

## Patentansprüche

1. Verfahren zum Steuern eines Datenanrufs an einer Mobilstation, das Folgendes umfasst:
Erkennen von Empfang einer Freigabebefehlsmitteilung von einer Basisstation während eines Datenanrufs (S305);
Ermitteln, ob Anrufwiederholbeschränkung notwendig ist, basierend auf der Freigabebefehlsmitteilung und
Beschränken von Wiederholen des Datenanrufs während eines Wiederholverzögerungszeitraums, wenn Anrufwiederholbeschränkung notwendig ist, **dadurch gekennzeichnet, dass** die Anrufwiederholbeschränkung notwendig ist beim Empfangen der Freigabebefehlsmitteilung innerhalb eines Zeitraumes von Verkehrskanalzuweisung bis Punkt-zu-Punkt-Protokoll- (PPP-) -Sitzungsaushandlung.

2. Verfahren nach Anspruch 1, wobei Ermitteln, ob Anrufwiederholbeschränkung notwendig ist, ferner Folgendes umfasst:
Ermitteln, ob zur Zeit des Empfangs der Freigabebefehlsmitteilung ein Verkehrskanal zugewiesen ist;
Freigeben des zugewiesenen Verkehrskanals, wenn ein Verkehrskanal zugewiesen ist;
Ermitteln, ob die Diensteoption verbunden ist (S307), wenn kein Verkehrskanal zugewiesen ist;
Durchführen von Verkehrskanalfreigabe und Beenden des Datenanrufs (S313), wenn die Diensteoption nicht verbunden ist;
Ermitteln, ob zu sendende Pakete vorhanden sind (S309), wenn die Diensteoption verbunden ist;
Durchführen von Verkehrskanalfreigabe (S311), wenn keine zu sendenden Pakete vorhanden sind; und
Durchführen von Verkehrskanalfreigabe und Beenden des Datenanrufs (S313), wenn zu sendende Pakete vorhanden sind.

3. Verfahren nach Anspruch 1, wobei Beschränken von Wiederholen des Datenanrufs Hindern der Mobilstation am Senden einer Ursprungsmitteilung auf einem Zugangskanal zur Basisstation während des Wiederholverzögerungszeitraums umfasst.

4. Datenanrufssteuervorrichtung für eine Mobilstation, die Folgendes umfasst:
eine Hochfrequenzeinheit (210), die ausgelegt ist, Sprach- und Datenkommunikation mit einer Basisstation durchzuführen; und
eine Steuereinheit (270), die ausgelegt ist, Wiederholen eines Datenanrufs für die Diensteoption während eines Wiederholverzögerungszeitraums nach Empfang einer Freigabebefehlsmitteilung von der Basisstation während des Datenanrufs zu beschränken, wobei die Steuereinheit ferner Folgendes umfasst:
einen Freigabebefehlsanalysator (271), der ausgelegt ist, eine empfangene Freigabebefehlsmitteilung zu analysieren, um zu ermitteln, ob Anrufwiederholbeschränkung notwendig ist; und
einen Aufrufwiederholbeschränker (275), um, wenn Anrufwiederholbeschränkung notwendig ist, Wiederholen des Datenanrufs für die Diensteoption zu beschränken, **dadurch gekennzeichnet, dass** die Steuereinheit ausgelegt ist, zu ermitteln, dass Anrufwiederholbeschränkung notwendig ist, wenn die Freigabebefehlsmitteilung innerhalb eines Zeitraums von Verkehrskanalzuweisung bis Punkt-zu-Punkt-Protokoll- (PPP-) -Sitzungsaushandlung empfangen worden ist.

5. Datenanrufssteuervorrichtung nach Anspruch 4, wobei die Steuereinheit ferner einen Paket-Kanal-Handler (273) umfasst, der ausgelegt ist, einen zugewiesenen Verkehrskanal freizugeben und den aktuellen Datenanruf zu beenden.

6. Datenanrufssteuervorrichtung nach Anspruch 4, wobei der Aufrufwiederholbeschränker (275) ausgelegt ist, Sendung einer Ursprungsmitteilung auf einem Zugangskanal zur Basisstation während des Wiederholverzögerungszeitraums nach Verkehrskanalfreigabe oder Datenanrufbeendigung zu unterbinden, wenn ermittelt worden ist, dass Anrufwiederholbeschränkung notwendig ist.

7. Datenanrufssteuervorrichtung nach Anspruch 4, die ferner einen Datenverarbeiter (220) umfasst, der ausgelegt ist, Daten, die einer empfangenen Freigabebefehlsmitteilung zugeordnet sind, und Paketdaten zu verarbeiten, die einer verbundenen Diensteoption zugeordnet sind.

## Revendications

1. Procédé pour commander un appel de données au niveau d'une station mobile, comprenant :
la détection d'une réception d'un message d'ordre de libération à partir d'une station de base au cours d'un appel de données (S305) ;
la détermination si une restriction de tentative d'appel est nécessaire sur la base du message d'ordre de libération ; et
la restriction de tentative de l'appel de données au cours d'une période de délai de tentative, lorsque la restriction de tentative d'appel est nécessaire, **caractérisé en ce que** la restriction de tentative d'appel est nécessaire lors de la réception du message d'ordre de libération au cours d'une période de temps à partir d'une affectation de canal de trafic jusqu' à une négociation de session de protocole de point à point, PPP.

2. Procédé selon la revendication 1, dans lequel la détermination si une restriction de tentative d'appel est nécessaire comprend en outre :
la détermination si un canal de trafic est affecté au moment de la réception du message d'ordre de libération ;
la libération, dans le cas où un canal de trafic est affecté, du canal de trafic affecté ;
la détermination, dans le cas où un canal de trafic n'est pas affecté, si l'option de service est connectée (S307) ;
l'exécution, dans le cas où l'option de service n'est pas connectée, d'une libération de canal de trafic et la terminaison de l'appel de données (S313) ;
la détermination, dans le cas où l'option de service est connectée, s'il y a des paquets à transmettre (S309) ;
l'exécution, dans le cas où il y a des paquets à transmettre, d'une libération de canal de trafic (S311) ; et
l'exécution, dans le cas où il y a des paquets à transmettre, d'une libération de canal de trafic et la terminaison de l'appel de données (S313).

3. Procédé selon la revendication 1, dans lequel la restriction de tentative de l'appel de données comprend l'interdiction à la station mobile de transmettre un message de création sur un canal d'accès à la station de base au cours de la période de délai de tentative.

4. Appareil de commande d'appel de données pour une station mobile, comprenant :
une unité de radiofréquences (210) apte à effectuer une communication vocale et de données avec une station de base ; et
une unité de commande (270) apte à effectuer une restriction de tentative d'un appel de données pour l'option de service au cours d'une période de délai de tentative à la réception d'un message d'ordre de libération à partir de la station de base au cours de l'appel de données, l'unité de commande comprenant en outre :
un analyseur d'ordre de libération (271) apte à analyser un message d'ordre de libération reçu pour déterminer si une restriction de tentative d'appel est nécessaire ; et
un dispositif de restriction de tentative d'appel (275) pour effectuer, dans le cas où une restriction de tentative d'appel est nécessaire, une restriction de tentative de l'appel de données pour l'option de service,
**caractérisé en ce que** l'unité de commande est apte à déterminer qu'une restriction de tentative d'appel est nécessaire lorsque le message d'ordre de libération est reçu au cours d'une période de temps à partir d'une affectation de canal de trafic jusqu'à une négociation de session de protocole de point à point, PPP.

5. Appareil de commande d'appel de données selon la revendication 4, dans lequel l'unité de commande comprend en outre un gestionnaire de paquet/canal (273) apte à libérer un canal de trafic affecté et à terminer l'appel de données en cours.

6. Appareil de commande d'appel de données selon la revendication 4, dans lequel le dispositif de restriction de tentative d'appel (275) est apte à interdire une transmission d'un message de création sur un canal d'accès à la station de base au cours de la période de délai de tentative après une libération de canal de trafic ou une terminaison d'appel de données dans le cas où il est déterminé qu'une restriction de tentative d'appel est nécessaire.

7. Appareil de commande d'appel de données selon la revendication 4, comprenant en outre un processeur de données (220) apte à traiter des données associées à un message d'ordre de libération reçu et des données de paquets associées à une option de service connectée.
